# EUROPÄISCHE PATENTANMELDUNG

(11) **EP 2 889 583 A1**
(43) Veröffentlichungstag der Anmeldung: **01.07.2015**
(21) Anmeldenummer: 14166351.8
(22) Anmeldetag: 29.04.2014
(51) Int. Cl.: G01C 21/32, G01C 21/36, G09B 29/10, G08G 1/0962, G08G 1/0967, B60W 40/06, G06K 9/00

(54) **Verfahren und Vorrichtung zum Erstellen einer angepassten Safety Map für ein Kraftfahrzeug**

(30) Priorität: 19.12.2013 DE 102013226631
(71) Anmelder: Conti Temic Microelectronic GmbH, 90411 Nürnberg (DE); Continental Teves AG & Co. oHG, 60488 Frankfurt am Main (DE)
(72) Erfinder: Hartmann, Bernd, 61350 Bad Homburg (DE); Schräbler, Sighard, 61184 Karben (DE); Adomat, Rolf, 88097 Eriskirch (DE); Krökel, Dieter, 88097 Eriskirch (DE)

(57) **Zusammenfassung**

Die Erfindung betrifft eine Vorrichtung und ein Verfahren zum Erstellen einer angepassten Safety Map für ein Kraftfahrzeug (1), wobei das Verfahren folgende Schritte umfasst: Erfassen (S1) von Fahrbahnzustandsdaten mittels einer Sensoreinrichtung; Ermitteln (S2) eines vorliegenden Fahrbahnzustandes anhand der erfassten Fahrbahnzustandsdaten; und Erstellen (S3) der angepassten Safety Map auf Basis des ermittelten vorliegenden Fahrbahnzustandes und einer primären Safety Map.

## Beschreibung

### Technisches Gebiet

Die vorliegende Erfindung betrifft ein Fahrerassistenzsystem für ein Kraftfahrzeug. Insbesondere betrifft die vorliegende Erfindung ein Verfahren und eine Vorrichtung zum Erstellen einer angepassten Safety Map für ein Kraftfahrzeug.

### Technischer Hintergrund

Bekannt sind digitale Karten, sogenannte Safety Maps, die unter anderem Gefahrenschwerpunkte für den Straßenverkehr aufzeigen und bestimmten Positionen auf der Karte zuordnen. So wurden beispielsweise sogenannte "Day One Applications" vereinbart, eine davon ist die "Hazardous Location Warning", also die Warnung vor gefährlichen Stellen im Fahrbahnverlauf.

Solche gefährlichen Stellen können beispielsweise durch Gegenstände auf der Fahrbahn, die so zu Hindernissen werden, durch bauliche Unzulänglichkeiten, bauliche Veränderungen oder Beschädigungen der Fahrbahn zum Beispiel ein sogenanntes Pothole oder ein Fahrbahnaufbruch beispielsweise durch hohe Fahrbahntemperaturen im Sommer, durch Verschmutzung zum Beispiel ein Ölfleck/eine Ölspur oder Schmutz durch Baustellenfahrzeuge oder landwirtschaftlichen Verkehr und/oder durch eine Fahrbahnauflage wie Wasser, Schnee oder Eis, wodurch rutschige Stellen entstehen können, hervorgerufen werden.

Nun ist aber eine gezielte Zuordnung von glatten Stellen, sofern sie nicht ausschließlich durch Verschmutzung hervorgerufen werden, nur bei Kenntnis des tatsächlichen Fahrbahnzustands auch sinnvoll. Die Einbeziehung von digitalen Wetterkarten reicht hier bei weitem nicht aus. Das lokale Wetter kann nur recht unpräzise vorher gesagt werden und der tatsächliche Fahrbahnzustand, etwa ob nass oder trocken, lässt sich nicht immer zuverlässig daraus ableiten.

### Zusammenfassung der Erfindung

Es kann als Aufgabe der vorliegenden Erfindung angesehen werden, die Effizienz von Fahrerassistenzsystemen zu erhöhen.

Diese Aufgabe wird durch die Gegenstände der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft ein Verfahren zum Erstellen einer angepassten Safety Map für ein Kraftfahrzeug, wobei das Verfahren folgende Schritte umfasst: Erfassen von Fahrbahnzustandsdaten mittels einer Sensoreinrichtung; Ermitteln eines vorliegenden Fahrbahnzustandes anhand der erfassten Fahrbahnzustandsdaten; und Erstellen der angepassten Safety Map auf Basis des ermittelten vorliegenden Fahrbahnzustandes und einer primären Safety Map.

Nach einem zweiten Aspekt der vorliegenden Erfindung ist eine Vorrichtung zum Erstellen einer angepassten Safety Map für ein Kraftfahrzeug vorgesehen, wobei die Vorrichtung umfasst: eine Sensoreinrichtung, welche dazu ausgebildet ist, Fahrbahnzustandsdaten zu erfassen; eine Auswertungseinrichtung, welche dazu ausgebildet ist, anhand der erfassten Fahrbahnzustandsdaten einen vorliegenden Fahrbahnzustand zu ermitteln; und eine Generierungseinrichtung, welche dazu ausgebildet ist, auf Basis des ermittelten vorliegenden Fahrbahnzustandes und einer primären Safety Map die angepasste Safety Map zu erstellen.

Vorteilhafte Ausgestaltungen der Erfindung sind in den Unteransprüchen gekennzeichnet.

Die vorliegende Erfindung zeichnet sich dadurch aus, dass der tatsächliche Fahrbahnzustand mit fahrzeug- oder infrastruktur-basierten optischen Sensoren, wie Kameras/Videosystemen oder auch Lasersensoren erfasst wird und so zur Differenzierung der Safety-Map herangezogen wird, d.h. je nach Fahrbahnzustand, beispielsweise trocken, nass, schneebedeckt oder vereist werden Safety-Maps mit unterschiedlichen Fahrdynamikprofilen/-grenzen auf Basis des durch den Fahrbahnzustand einzugrenzenden aktuellen Reibbeiwerts für den gleichen Fahrbahnbereich angezogen.

Je nach Wetter oder besser gesagt Fahrbahnauflage ergeben sich somit unterschiedliche Warngrenzen. Beim Überfahren dieser Stellen durch einzelne Fahrzeuge wird ein Fahrdynamikprofil anhand von charakteristischen Fahrdynamikdaten erstellt.

Beispielsweise können hierzu neben weiteren Parametern charakteristische Durchfahrgeschwindigkeiten und/oder Querbeschleunigungen in Kurven oder Anhaltewege oder Bremsverzögerungen vor Ampeln mit oder ohne ABS-Eingriff verwendet werden. Neben einer statistischen Betrachtung lassen sich bei Eingriff von Regelsystemen ebenfalls die fahrdynamischen Grenzen ableiten.

Gegenstand der Erfindung ist die Erfassung des aktuellen, lokalen Fahrbahnzustands mit Hilfe von optischen Sensoren wie Kamera und/oder Videosystemen bzw. Lasersensoren sowie dessen Einbeziehung in eine nach Fahrbahnzustand differenzierte Safety-Map.

Die Sensoren können sowohl fahrzeugfest als auch ortsfest sein. Dabei kann die angepasste oder differenzierte Safety-Map nach den klassischen Fahrbahnzuständen trocken, nass, schnee- oder eisbedeckt sowie nach deren Übergangs- und Mischzuständen unterschieden werden. Mit Hilfe der bildverarbeitenden Technologien oder auch durch Lasersensoren ist es auch möglich den Fahrbahnzustand lokal zu bestimmen, z.B. durch Segmentierung der Kamerabilder.

Dadurch können vorteilhaft Gefahrenschwerpunkte gezielt einzelnen Fahrbahnabschnitten zugeordnet werden (z.B. komprimierter, vereister Schnee vor Kreuzungen oder stehendes Wasser in Spurrillen oder vereiste Stellen etc.).

Entsprechend des Wetters bzw. des aktuellen Fahrbahnzustands wird die zuletzt abgespeicherte differenzierte Saftey-Map angezogen. Darin ist u.a. die statistische Verteilung der Fahrdynamikdaten (Fahrdynamikprofil) mit den fahrdynamischen Grenzwerten(beispielsweise max. Bremsverzögerung oder maximale Kurvengrenzgeschwindigkeit) hinterlegt.

Diese statistischen Profildaten werden laufend mit aktuellen Messdaten weiterer Fahrzeuge überschrieben und somit fortlaufend aktualisiert. Das ist deshalb notwendig, da sich einerseits die Fahrbahngriffigkeit mit zunehmender Verkehrsbeanspruchung ändert und darüber hinaus auch jahreszeitlichen Schwankungen unterliegt.

Die Langzeitveränderungen können beispielsweise auch von Strassenbaubehörden als Entscheidungskriterium für notwendige Fahrbahnerneuerungen genutzt werden.

So lassen sich auf Basis des Fahrbahnzustands aktuelle Reibwertklassen ableiten oder zumindest gezielt Abgrenzungen entsprechend der Klassen vornehmen. In einer vorteilhaften Form können auch Reibwertmessungen, beispielsweise von Straßenbauämtern oder öffentlichen Behörden in die digitalen Karten zur Reibwertschätzung einbezogen werden.

Neben der hier erläuterten Klassifikation des Fahrbahnzustands (mit Zustand gemeint ist hier eine Fahrbahnauflage) können mit Hilfe von einer Kamera, bzw. von einer Stereokamera auch Daten zur Fahrbahnoberfläche, z.B. Löcher, Welligkeiten, Aufrisse oder Spurrillen, die ja ebenfalls sicherheitsrelevant sein können, erfasst und in der differenzierten Safety-Map hinterlegt werden.

Die Verifikation, ob es sich auch tatsächlich um derartige Beschädigungen/Verschiebungen der Fahrbahnoberfläche handelt kann jeweils mit Hilfe eines Fahrzeuganregungsmusters beim Durchfahren erfolgen.

Mit anderen Worten kann ein Kerngedanke der vorliegenden Erfindung darin gesehen werden, dass es sich primär um eine nach dem Fahrbahnzustand differenzierte digitale Karte handelt und daraus ein fortlaufend aktualisierter verfügbarer Reibbeiwert/Reibwertklasse zwischen Fahrbahn und Reifen abgeleitet wird, wie er beispielsweise für das hochautomatisierte Fahren benötigt wird mit genauer lokaler Zuordnung durch Segmentierung einzelner Bilder.

Ausgehend von Daten des Wetterdienstes, vorhergesagt für den gegenwärtigen Ort und die gegenwärtige Zeit, die jedoch für sich genommen in der Aussage zu früh, zu spät, oder schlichtweg lokal falsch sein können, wird so mit Hilfe von Kamera/Video- oder Lasersensoren der tatsächlich vorliegende Fahrbahnzustand bestimmt und in der differenzierte Safety-Map berücksichtigt.

Die globalen Wetterdienstdaten, meist mit 10km*10km Raster hinterlegt, werden nun dadurch abgesichert und präzisiert, dass optische, in das Fahrzeug oder auch in die Infrastruktur eingebaute Sensoren, insbesondere Kamera/Video- und/oder andere optische Road State Laser-Sensoren, die Fahrbahn auf ihren Zustand hin lokal abtasten.

Durch die Segmentierung von Einzelbildern wird eine positionsgenaue Zuordnung zu bestimmten Fahrbahnabschnitten und -spuren möglich. Die positionsgenaue Zuordnung ist deshalb vorteilhaft, da sich die Griffigkeit von Fahrbahndecken wie bereits erläutert abschnittsweise/spurweise stark ändern kann.

Die so über optische Verfahren gewonnenen Fahrbahnzustandsinformationen können zusätzlich auch mit Informationen von Reifensensoren, Temperatursensoren, Feuchtesensoren, Regensensoren, Scheibenwischeraktivitäten und/oder Inertialsensorik fusioniert werden um die aus den Fahrbahnzustandsinformationen abgeleiteten Reibwertklassen möglichst präzise bestimmen und absichern zu können.

D.h. man kann erwartete Hypothesen durch Datenfusion absichern: "die erwartete Kaltfront ist jetzt eingetroffen", "die Straße war schon feucht und wird nun gefrieren" oder "der Regen hat zwar aufgehört, aber die Straße ist noch nass und definitiv noch immer rutschig, das bestätigt die letzte Messung".

Die genaue Positionierung des Fahrzeugs erfolgt beispielsweise über:
- präzise digitale Karten oder
- Vermessung von Landmarken oder
- präzise GPS Positionierung und Stützung durch Fahrdynamiksensoren.

Ein weiterer Vorteil der vorliegenden Erfindung liegt darin, dass die Kenntnis des Fahrbahnzustandes (trocken, nass, schnee- oder eisbedeckt und deren Übergangs- und Mischzustände) eine fahrbahnzustandsdifferenzierte Betrachtung von Safety-Maps erlaubt.

Der Fahrbahnzustand beeinflusst direkt den zwischen Reifen und Fahrbahn zur Verfügung stehenden Kraftschlußbeiwert p, für die Reifen-/Fahrbahnkombination, wobei der Kraftschlußbeiwert wiederum die fahrdynamischen Grenzen für Kraftfahrzeuge bestimmt.

Somit ist es bei Benutzung von Saftey-Maps zwingend erforderlich den aktuellen Fahrbahnzustand/Fahrbahnauflage zu kennen und diesen in der angepassten Saftey-Map zu berücksichtigen.

Damit erlaubt die vorliegende Erfindung vorteilhaft, statistische Betrachtungen von Fahrdynamikdaten (Bremswege, Längsbeschleunigungen, Querbeschleunigungen, Gierrate, Fahrgeschwindigkeiten) zu betreiben, die fahrbahnzustandsdifferenziert Mittelwerte, Verteilungen und Grenzwerte von Fahrdynamikdaten erlauben, die als wichtige Informationen in die angepasste Saftey Map einfließen.

Das so erstellte fahrbahnzustandsabhängige Fahrdynamikprofil dient im Folgenden dazu andere Fahrzeuge auf mögliche Gefahren rechtzeitig hinzuweisen. So entsteht durch die vorliegende Erfindung ein kontinuierliches und an Wetterverhältnisse anpassbares Monitoring, d.h. eine große Datenbasis zur Bewertung der Fahrbahngriffigkeit in Abhängigkeit des Fahrbahnzustands.

Die vorliegende Erfindung ermöglicht vorteilhaft, eine frühzeitige und robuste Warnung vor Gefahrenstellen zu ermöglichen.

Die vorliegende Erfindung ermöglicht vorteilhaft, dass man durch die optische Erfassung des Fahrbahnzustandes die ganze Bandbreite aller fahrdynamischen Daten die beispielsweise durch Bremsen, Antreiben und bei Kurvenfahrt erzeugt werden, nach dem jeweiligen Fahrbahnzustand klassifizieren und statistisch bewerten kann.

Bei entsprechender mathematischer Behandlung der Daten kann so eine verlässliche, fahrbahnzustandsabhängige Saftey-Map erstellt werden. Die fahrdynamischen Grenzwerte können vorteilhaft anhand von Eingriffsschwellen, also beim Eingriff von Fahrdynamikregelsystemen erkannt werden.

Unter dem Kraftfahrzeug kann beispielsweise ein Personenkraftwagen oder ein Lastkraftwagen verstanden werden. Die Kameraeinrichtung kann als Infrarotkamera oder eine sonstige Kamera ausgeführt sein. Die Kameraeinrichtung kann ferner dazu ausgeführt sein, mehrere Bilder, ein Video und/oder eine Bildfolge der Umgebung des Fahrzeuges aufzunehmen.

Unter der Kameraeinrichtung kann beispielsweise eine Kamera zur Verkehrszeichenerkennung oder zur Totwinkel-Überwachung oder eine Kamera eines sonstigen Fahrerassistenzsystems verstanden werden.

Unter der Auswertungseinrichtung kann beispielsweise ein digitaler Signalprozessor, engl. digital signal processor, DSP, verstanden werden, welcher dazu ausgebildet ist, eine kontinuierlichen Bearbeitung von digitalen Signalen z. B. Audio-oder Videosignale zu ermöglichen.

In einer vorteilhaften Ausführungsform der vorliegenden Erfindung ist vorgesehen, dass der Fahrbahnzustand durch eine Klassifikation der erfassten Videobilder ermittelt wird.

In einer vorteilhaften Ausführungsform ist vorgesehen, dass der Fahrbahnzustand durch ein Analysieren der erfassten Videobilder mittels eines neuronalen Netzwerkes ermittelt wird.

In einer weiteren vorteilhaften Ausführungsform der vorliegenden Erfindung ist vorgesehen, dass der Fahrbahnzustand ferner anhand von Messdaten eines Lasersensors ermittelt wird.

Dabei kann als Lasersensor ein auf Englisch sogenannter "road-state laser sensor" - auf Deutsch "Straßenzustandslasersensor" - oder ein "surface state sensor" - auf Deutsch "Oberflächenzustandsensor" - verwendet werden.

Solche Lasersensoren dienen der berührungslosen Erfassung des Straßenzustandes und werden zur spektroskopischen Untersuchung der Straßenoberfläche verwendet. Ferner ist es mit einem solchen Lasersensor möglich, die Straßen-Oberflächen-Temperatur berührungslos zu messen.

Dies erlaubt auf einfache Weise, Wasser, Schnee oder Eis auf der Fahrbahn zu detektieren und zu quantifizieren.

In einer vorteilhaften Ausführungsform der vorliegenden Erfindung ist vorgesehen, dass der Fahrbahnzustand ferner anhand von Messdaten eines Fahrzeug- oder Infrastruktur-basierten Sensors ermittelt wird.

Dies erlaubt auf einfache Weise, eine Vielzahl von Messdaten aufzunehmen.

In einer vorteilhaften Ausführungsform der vorliegenden Erfindung ist vorgesehen, dass als der Fahrzeug- oder Infrastruktur-basierter Sensor ein Außentemperatursensor und/oder ein Regensensor und/oder ein Sensor zum Erfassen einer Scheibenwischeraktivität verwendet wird.

In einer vorteilhaften Ausführungsform der vorliegenden Erfindung ist vorgesehen, dass der Fahrbahnzustand ferner anhand von an das Kraftfahrzeug übermittelten digitalen Wetterdaten ermittelt wird.

Dies erhöht vorteilhaft die Informationsdichte und damit die Verlässlichkeit der differenzierten Safety Map.

In einer vorteilhaften Ausführungsform der vorliegenden Erfindung ist vorgesehen, dass zum Erstellen der angepassten Safety Map ein fahrbahnzustandsabhängiges Fahrdynamikprofil mit einer statistischen Betrachtung von charakteristischen Fahrdynamikdaten erstellt wird.

Dies erhöht vorteilhaft die Robustheit oder Zuverlässigkeit des Verfahrens.

In einer vorteilhaften Ausführungsform der vorliegenden Erfindung ist vorgesehen, dass die Sensoreinrichtung als eine Kameraeinrichtung ausgebildet ist und dazu ausgelegt ist, Videobilder als Fahrbahnzustandsdaten zu erfassen.

In einer vorteilhaften Ausführungsform der vorliegenden Erfindung ist vorgesehen, dass die Sensoreinrichtung als eine Lasersensoreinrichtung ausgebildet ist und dazu ausgelegt ist, eine Reflektivität der Fahrbahn bei mindestens einer charakteristischen Wellenlänge zu erfassen.

In einer vorteilhaften Ausführungsform der vorliegenden Erfindung ist vorgesehen, dass ferner eine Betrachtung der fahrdynamischen Grenzwerte zum Erstellen des fahrbahnzustandsabhängigen Fahrdynamikprofils vorgenommen wird.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Figuren

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Vorrichtung zum Erstellen einer angepassten Safety Map für ein Kraftfahrzeug gemäß einer Ausführungsform der Erfindung; und
- Fig. 2: eine schematische Darstellung eines Flussdiagramms eines Verfahrens zum Erkennen von flüssigem Niederschlag für ein Kraftfahrzeug gemäß einer weiteren Ausführungsform der Erfindung.

### Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

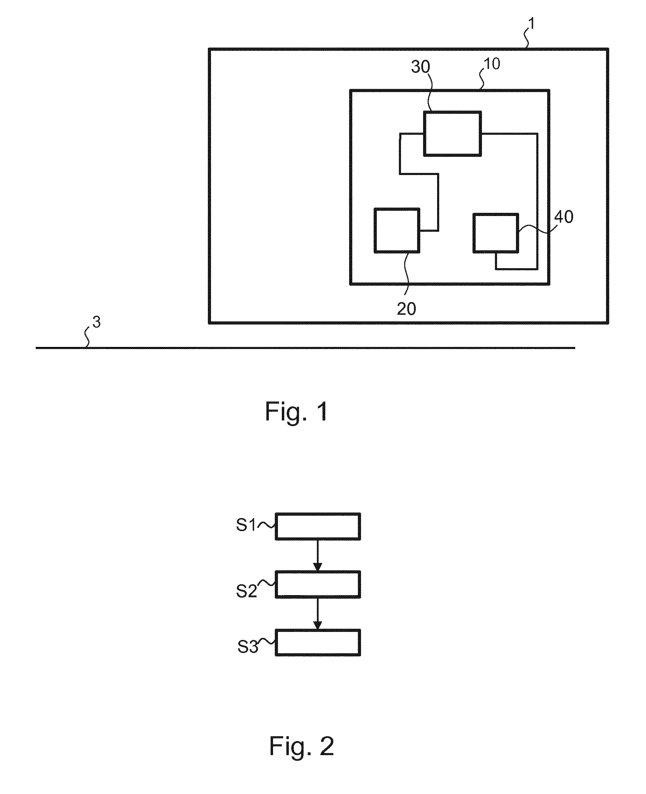

Die Figur 1 eine schematische Darstellung einer Vorrichtung zum Erstellen einer angepassten Safety Map für ein Kraftfahrzeug 1 gemäß einer Ausführungsform der Erfindung.

Eine Vorrichtung 10 zum Erstellen einer angepassten Safety Map für ein Kraftfahrzeug 1 umfasst beispielsweise eine Sensoreinrichtung 20, eine Auswertungseinrichtung 30, und eine Generierungseinrichtung 40.

Die Sensoreinrichtung 20 kann als eine Kameraeinrichtung ausgebildet sein und kann dazu ausgelegt sein, Videobilder zu erfassen.

Die Sensoreinrichtung 20 kann als eine Lasersensoreinrichtung ausgebildet sein und kann dazu ausgelegt sein, eine Reflektivität der Fahrbahn bei mindestens einer charakteristischen Wellenlänge zu erfassen.

Ferner können optische Kamerasensoren und Lasersensoren auch in der Sensoreinrichtung 20 kombiniert werden.

Als charakteristische Wellenlänge kann eine Spektrallinie oder Resonanzlinie dienen, für die Wasser, Schnee oder Eis eine Absorption zeigt.

Die Auswertungseinrichtung 30 kann dazu ausgelegt sein, anhand der erfassten Videobilder einen vorliegenden Fahrbahnzustand einer Fahrbahn 3 zu ermitteln.

Die Generierungseinrichtung 40 kann dazu ausgebildet sein, auf Basis des ermittelten vorliegenden Fahrbahnzustandes der Fahrbahn 3 und einer primären Safety Map die angepasste Safety Map zu erstellen.

Die primäre Safety Map kann als eine Straßenkarte ausgebildet sein, welche primär Geländeinformationen oder sonstige topographischen Daten zum Verlauf der Fahrbahn 3 oder generelle Daten zum Fahrbahnzustand der Fahrbahn 3 enthält.

Die Figur 2 zeigt ein Flussdiagramm eines Verfahrens zum Erstellen einer angepassten Safety Map für ein Kraftfahrzeug gemäß einer weiteren Ausführungsform der Erfindung.

Das Verfahren zum Erstellen einer angepassten Safety Map für ein Kraftfahrzeug umfasst folgende Schritte:

Als ein erster Schritt des Verfahrens erfolgt ein Erfassen S1 von Fahrbahnzustandsdaten, etwa in Form von Videobildern oder in der Form von Reflektivitätswerten mittels einer Sensoreinrichtung.

Als ein zweiter Schritt des Verfahrens erfolgt ein Ermitteln S2 eines vorliegenden Fahrbahnzustandes anhand der erfassten Fahrbahnzustandsdaten.

Als ein dritter Schritt des Verfahrens erfolgt ein Erstellen S3 der angepassten Safety Map auf Basis des ermittelten vorliegenden Fahrbahnzustandes und einer primären Safety Map.

Die Verfahrensschritte können dabei iterativ oder rekursiv und in beliebiger Reihenfolge wiederholt werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Erstellen einer angepassten Safety Map für ein Kraftfahrzeug (1), wobei das Verfahren folgende Schritte umfasst:
- Erfassen (S1) von Fahrbahnzustandsdaten mittels einer Sensoreinrichtung;
- Ermitteln (S2) eines vorliegenden Fahrbahnzustandes anhand der erfassten Fahrbahnzustandsdaten; und
- Erstellen (S3) der angepassten Safety Map auf Basis des ermittelten vorliegenden Fahrbahnzustandes und einer primären Safety Map.

2. Verfahren nach Anspruch 1, wobei als die Fahrbahnzustandsdaten Videobilder und als die Sensoreinrichtung eine Kameraeinrichtung verwendet werden.

3. Verfahren nach Anspruch 2, wobei der Fahrbahnzustand durch eine Klassifikation der erfassten Videobilder ermittelt wird.

4. Verfahren nach Anspruch 2 oder 3, wobei der Fahrbahnzustand durch ein Analysieren der erfassten Videobilder mittels eines neuronalen Netzwerkes ermittelt wird.

5. Verfahren nach einem der Ansprüche 1 bis 4, wobei der Fahrbahnzustand ferner anhand von Messdaten eines Lasersensors ermittelt wird.

6. Verfahren nach einem der Ansprüche 1 bis 5, wobei der Fahrbahnzustand ferner anhand von Messdaten eines Fahrzeug- oder Infrastruktur-basierten Sensors ermittelt wird.

7. Verfahren nach Anspruch 6, wobei als der Fahrzeug- oder Infrastruktur-basierter Sensor ein Außentemperatursensor und/oder ein Regensensor und/oder ein Sensor zum Erfassen einer Scheibenwischeraktivität verwendet wird.

8. Verfahren nach einem der Ansprüche 1 bis 7, wobei der Fahrbahnzustand ferner anhand von an das Kraftfahrzeug übermittelten digitalen Wetterdaten ermittelt wird.

9. Verfahren nach einem der Ansprüche 1 bis 8, wobei zum Erstellen der angepassten Safety Map ein fahrbahnzustandsabhängiges Fahrdynamikprofil mit einer statistischen Betrachtung von charakteristischen Fahrdynamikdaten erstellt wird.

10. Verfahren nach Anspruch 9, wobei ferner eine Betrachtung der fahrdynamischen Grenzwerte zum Erstellen des fahrbahnzustandsabhängigen Fahrdynamikprofils vorgenommen wird.

11. Vorrichtung (10) zum Erstellen einer angepassten Safety Map für ein Kraftfahrzeug (1), wobei die Vorrichtung umfasst:
- eine Sensoreinrichtung (20), welche dazu ausgebildet ist, Fahrbahnzustandsdaten zu erfassen;
- eine Auswertungseinrichtung (30), welche dazu ausgebildet ist, anhand der erfassten Fahrbahnzustandsdaten einen vorliegenden Fahrbahnzustand zu ermitteln; und
- eine Generierungseinrichtung (40), welche dazu ausgebildet ist, auf Basis des ermittelten vorliegenden Fahrbahnzustandes und einer primären Safety Map die angepasste Safety Map zu erstellen.

12. Vorrichtung nach Anspruch 11, wobei die Sensoreinrichtung (20) als eine Kameraeinrichtung ausgebildet ist und dazu ausgelegt ist, als die Fahrbahnzustandsdaten Videobilder zu erfassen.

13. Vorrichtung nach Anspruch 11, wobei die Sensoreinrichtung (20) als eine Lasersensoreinrichtung ausgebildet ist und dazu ausgelegt ist, eine Reflektivität der Fahrbahn bei mindestens einer charakteristischen Wellenlänge zu erfassen.
